# EUROPÄISCHE PATENTSCHRIFT

(11) **EP 0 914 631 B1**
(45) Veröffentlichungstag und Bekanntmachung des Hinweises auf die Patenterteilung: **14.03.2001**
(21) Anmeldenummer: 97930502.6
(22) Anmeldetag: 04.07.1997
(51) Int. Cl.: G05B 11/42

(54) **PID-REGLER MIT SCHUTZ DES INTEGRATORS VOR SÄTTIGUNG BEI SCHNELLER ÄNDERUNG DER FÜHRUNGSGRÖSSE**
PID CONTROLLER WITH PROTECTION OF THE INTEGRATOR AGAINST SATURATION UPON A RAPID CHANGE OF THE REFERENCE VARIABLE
REGULATEUR PROPORTIONNEL-INTEGRAL-DIFFERENTIEL (PID) A INTEGRATEUR PROTEGE CONTRE LA SATURATION LORS D'UNE VARIATION RAPIDE DE LA GRANDEUR DE REFERENCE

(30) Priorität: 24.07.1996 DE 19629845
(43) Veröffentlichungstag der Anmeldung: 12.05.1999
(73) Patentinhaber: Mannesmann Rexroth AG, 97816 Lohr am Main (DE)
(72) Erfinder: HAUSEN, Detlef, D-63741 Aschaffenburg (DE); LIEBLER, Gerold, D-97828 Marktheidenfeld (DE); SACHS, Dieter, D-97846 Partenstein (DE)
(86) Internationale Anmeldenummer: EP9703532
(87) Internationale Veröffentlichungsnummer: WO9804963

(56) Entgegenhaltungen:
- US-A- 5 072 357
- US-A- 5 384 526

## Beschreibung

Die Erfindung betrifft einen PID-Regler mit parallel angeordnetem P-Anteil, I-Anteil und D-Anteil gemäß dem Oberbegriff des Anspruchs 1.

Ein derartiger PID-Regler ist z. B. aus dem Buch von Heinz Unbehauen "Klassische Verfahren zur Analyse und Synthese linear kontinuierlicher Regelsysteme", Verlag Vieweg 1982, Seiten 141 bis 142, bekannt. Bild 5.3.1 auf Seite 142 zeigt einen aus der Parallelschaltung eines P-Anteils, eines I-Anteils und eines D-Anteils gebildeten PID-Regler. Das Eingangssignal des PID-Reglers ist die aus der Führungsgröße und dem Istwert der Regelgröße gebildete Regelabweichung. In dem P-Anteil erfolgt nur eine Wichtung der Regelabweichung mit einem Faktor K_{P}. Der I-Anteil besteht aus einem Wichtungsteil, der die Regelabweichung mit einem Faktor K_{I} multipliziert, und einem Integrator, der die gewichtete Regelabweichung integriert. Der D-Anteil besteht aus einem Wichtungsteil, der die Regelabweichung mit einem Faktor K_{D} multipliziert, und einem Differenzierer, der die zeitliche Ableitung der gewichteten Regelabweichung bildet. Bei diesem PID-Regler führen schnelle Änderungen der Führungsgröße, wie sie z. B. bei einer sprungförmigen oder rampenförmigen Verstellung der Führungsgröße auftreten, durch die große Regelabweichung zu einem Aufladen des Integrators. Sobald der Istwert der Regelgröße die Führungsgröße erreicht hat, muß der Integrator wieder entladen werden, was zu einer Umkehrung des Vorzeichens der Regelabweichung führt, d. h. zu einem Überschwingen. Dies gilt besonders für Regelstrecken mit quasi-integralem Verhalten. Regelstrecken mit quasi-integralem Verhalten sind Regelstrecken, die grundsätzlich P_{T1}-Verhalten aufweisen, bei denen aber nur der lineare Anfangsbereich genutzt wird. Die Sprungantwort einer derartigen Regelstrecke ist in dem von der Mannesmann Rexroth GmbH herausgegebenen Buch "Der Hydraulik Trainer - Band 6: Hydrostatische Antriebe mit Sekundärregelung" (RD 00 293/08.89) auf Seite 29 im Diagramm 6 dargestellt. Regelstrecken mit quasi-integralem Verhalten sind z. B. die Drehzahlregelung von hydraulischen Sekundäreinheiten und die Druckregelung mit hydraulischen Verstellpumpen. Eine Optimierung des Führungsverhaltens derartiger Regelkreise durch Verlängerung der Nachstellzeit des Integrators verringert zwar die Schwingneigung bei schnellen Änderungen der Führungsgröße, verursacht aber eine Verschlechterung des Störverhaltens des Regelkreises.

Aus der Druckschrift US 5,384,526 A ist ein PID-Regler mit parallel angeordnetem P-Anteil, l-Anteil und D-Anteil zur Regelung der Drehgeschwindigkeit eines Motors bekannt. Bei diesem Regler wird die Sättigung des Integrators des l-Anteils über einen vorgebbaren Wert hinaus verhindert. Hierzu wird das Vorzeichen der dem Integrator zugeführten Regelabweichung umgekehrt, wenn die Regelabweichung einen Grenzwert erreicht hat. Ein Zeitglied sorgt dabei für eine Verzögerung zwischen dem Zeitpunkt, zu dem die Regelabweichung den Grenzwert erreicht hat, und dem Zeitpunkt, zu dem die Vorzeichenumkehr erfolgt.

Aus der Druckschrift US 5,072,357 A ist ein Regler mit einem Integrator bekannt, bei dem das dem Integrator zugeführte Eingangssignal immer dann mit einem konstanten Faktor multipliziert wird, wenn der Integrator in den Sättigungsbereich kommt. Dieser Faktor ist eine Größenordnung größer gewählt als der im normalen Bereich des Integrators wirksame Faktor. Der gegenüber dem Faktor im normalen Bereich vergrößerte Faktor erlaubt es dem Integrator, schneller aus dem Sättigungsbereich herauszukommen.

Der Erfindung liegt die Aufgabe zugrunde, einen PID-Regler der eingangs genannten Art zu schaffen, bei dem bei schnellen Änderungen der Führungsgröße nur ein geringes Überschwingen des Istwertes der Regelgröße auftritt, also das Führungsverhalten zu verbessern, ohne das Störverhalten zu verschlechtern.

Diese Aufgabe wird durch das im Anspruch 1 gekennzeichnete Merkmal gelöst. Die Erfindung verringert nach einer schnellen Änderung der Regelabweichung, die von einer schnellen Änderung der Führungsgröße verursacht ist, beim anschließenden Abbau der Regelabweichung das dem Integrator des PID-Reglers zugeführte Signal. Der erfindungsgemäße PID-Regler läßt sich besonders einfach als Digitalregler realisieren.

Vorteilhafte Weiterbildungen der Erfindung sind in den Unteransprüchen gekennzeichnet.

Die Erfindung wird im folgenden mit ihren weiteren Einzelheiten anhand von in den Zeichnungen dargestellten Ausführungsbeispielen näher erläutert. Es zeigen
- Figur 1: das Blockschaltbild eines erfindungsgemäßen PID-Reglers, bei dem die Regelabweichung sowohl dem P-Anteil und dem I-Anteil als auch dem D-Anteil zugeführt ist,
- Figur 2: das Blockschaltbild eines erfindungsgemäßen PID-Reglers, bei dem die Regelabweichung nur dem P-Anteil und dem I-Anteil zugeführt ist und dem D-Anteil der Istwert der Regelgröße zugeführt ist und
- Figur 3: das Blockschaltbild eines PID-Reglers entsprechend dem in der Figur 2 dargestellten Blockschaltbild, in dem die beiden Differenzierer durch einen Differenzierer ersetzt sind.

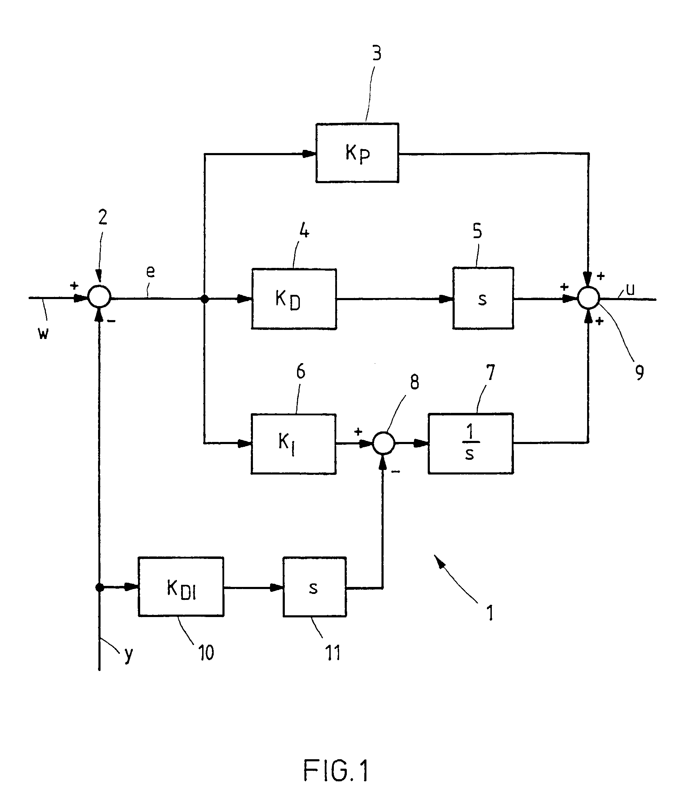

Gleiche Bauteile sind in den Figuren 1 bis 3 mit den gleichen Bezugszeichen versehen. Die Führungsgröße ist mit w und der Istwert der Regelgröße mit y bezeichnet. Die aus der Differenz von Führungsgröße w und dem Istwert der Regelgröße y gebildete Regelabweichung ist mit e bezeichnet, und die Reglerausgangsgröße ist mit u bezeichnet.

Die Figur 1 zeigt das Blockschaltbild eines PID-Reglers 1. Eine Summierstelle 2 bildet aus der Führungsgröße w und dem Istwert der Regelgröße y die Regelabweichung e. Der P-Anteil des PID-Reglers 1 enthält einen Wichtungsteil 3, der die Regelabweichung e mit einem Faktor K_{P} multipliziert. Der D-Anteil des PID-Reglers 1 besteht aus einen Wichtungsteil 4, der die Regelabweichung e mit einem Faktor K_{D} multipliziert, und einem Differenzierer 5, der die zeitliche Ableitung des Ausgangssignals des Wichtungsteils 4 bildet. Der Differenzierer 5 ist durch den seine Funktion beschreibenden Laplace-Operator s symbolisiert. Der I-Anteil des PID-Reglers 1 besteht aus einem Wichtungsteil 6, der die Regelabweichung e mit einem Faktor K_{I} multipliziert, und einem Integrator 7, der durch den seine Funktion beschreibenden Kehrwert des Laplace-Operators s symbolisiert ist. Zwischen dem Wichtungsteil 6 und dem Integrator 7 ist eine Summierstelle 8 angeordnet. Eine Summierstelle 9 verknüpft die Ausgangssignale des Wichtungsteils 3 des P-Anteils, des Differenzierers 5 des D-Anteils und des Integrators 7 des I-Anteils zu der Reglerausgangssgröße u. Die Reglerausgangsgröße u ist einer in der Figur 1 nicht dargestellten Regelstrecke mit quasi-integralem Verhalten zugeführt. Ein derartiger PID-Regler, ohne die Summierstelle 8, ist als solcher bekannt.

In dem in der Figur 1 dargestellten Ausführungsbeispiel des erfindungsgemäßen PID-Reglers sind zusätzlich ein Wichtungsteil 10 und ein Differenzierer 11 vorgesehen. Der Istwert der Regelgröße y ist dem Wichtungsteil 10 zugeführt. Der Wichtungsteil 10 multipliziert den Istwert der Regelgröße y mit einem Faktor K_{DI}. Der Differenzierer 11 bildet die zeitliche Ableitung des Ausgangssignals des Wichtungsteils 10. Die Summierstelle 8 bildet die Differenz aus dem Ausgangssignal des Wichtungsteils 6 und dem Ausgangssignal des Differenzierers 11. Das Ausgangssignal der Summierstelle 8 ist dem Integrator 7 als Eingangssignal zugeführt.

Das Eingangssignal des Integrators 7 ist nicht nur - wie bei dem bekannten PID-Regler in Parallelanordnung - von der Größe der Regelabweichung e abhängig, sondern zusätzlich auch von der Änderungsgeschwindigkeit des Istwertes der Regelgröße dy/dt. Ist der Istwert der Regelgröße y konstant, ist das Ausgangssignal des Differenzierers 11 gleich Null, und der PID-Regler 1 verhält sich wie ein bekannter PID-Regler, bei dem der Wichtungsteil 6 des I-Anteils direkt mit dem Integrator 7 verbunden ist und die Summierstelle 8 sowie der Wichtungsteil 10 und der Differenzierer 11 nicht vorhanden sind. Der aus dem Wichtungsteil 10 und dem Differenzierer 11 bestehende Zusatzzweig wird erst wirksam, wenn sich der Istwert der Regelgröße y ändert. Je größer die Änderungsgeschwindigkeit des Istwertes der Regelgröße dy/dt ist, um so größer ist das Ausgangssignal des Differenzierers 11. Das Ausgangssignal der Summierstelle 8 verringert sich in entsprechender Weise. Der Integrator 7 trägt deshalb um so weniger zu der Reglerausgangsgröße u bei, je größer die Änderungsgeschwindigkeit des Istwertes der Regelgröße dy/dt ist. Hierdurch wird verhindert, daß der Integrator 7 sich bei einer schnellen Änderung der Regelabweichung e nach einer schnellen Änderung der Führungsgröße w beim anschließenden Abbau der Regelabweichung e aufgrund des Nachfolgens des Istwertes der Regelgröße y (d. h. bei von Null verschiedener Änderungsgeschwindigkeit des Istwertes der Regelgröße dy/dt) zu weit auflädt. Betrachtet man nur die Hintereinanderschaltung der Blöcke 10, 11 und 7, so heben sich die Wirkungen des Differenzierers 11 und des Integrators 7 gegenseitig auf, so daß nur noch der Wichtungsteil 10 wirksam bleibt. Theoretisch wäre es zwar möglich, den Differenzierer 11 einzusparen und den Ausgang des Wichtungsteils 10 mit negativem Vorzeichen einem zusätzlichen Eingang der Summierstelle 9 zuzuführen, jedoch würde sich in diesem Fall der Integrator 7 zu weit aufladen. Gerade die Verminderung der durch den Wichtungsteil 6 gewichteten Regelabweichung e um das Ausgangssignal des Differenzierers 11 verhindert eine zu große Aufladung des Integrators 7, die bei einer Umkehr des Vorzeichens der Regelabweichung wieder abgebaut werden muß.

Die Anordnung der Wichtungsteile 3, 4, 6 und 10 ist so getroffen, daß die zugehörigen Parameter voneinander entkoppelt sind. Bei einer Verstellung eines der Parameter K_{P}, K_{D}, K_{I} oder K_{DI} behalten die jeweils anderen Parameter ihren bisherigen Wert bei.

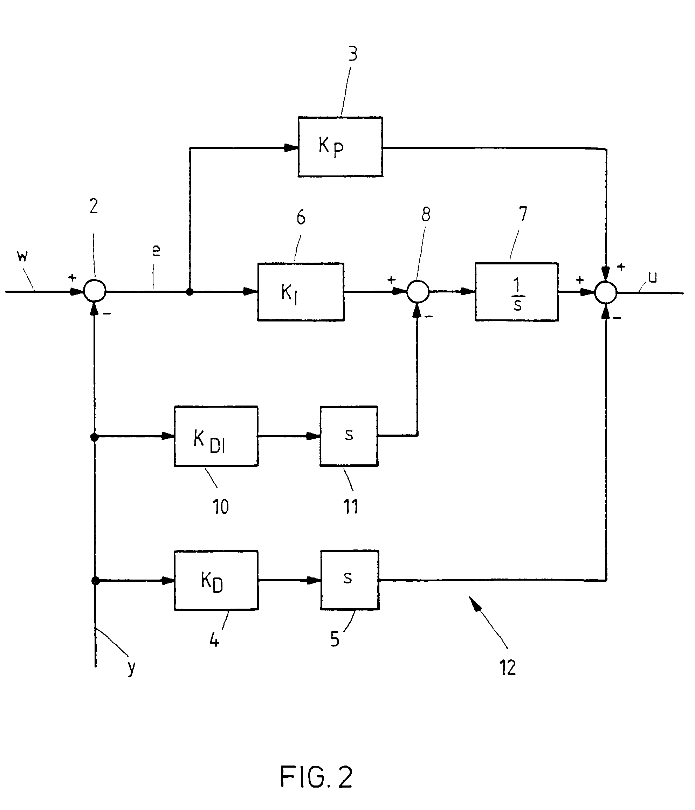

In der Figur 2 ist das Blockschaltbild eines weiteren erfindungsgemäßen PID-Reglers 12 dargestellt. Dieser PID-Regler unterscheidet sich von dem in der Figur 1 dargestellten PID-Regler 1 dadurch, daß dem aus dem Wichtungsteil 4 und dem Differenzierer 5 bestehenden D-Anteil anstelle der Regelabweichung e der Istwert der Regelgröße y als Eingangssignal zugeführt ist. Dem aus dem Wichtungsteil 3 bestehenden P-Anteil und dem aus dem Wichtungsteil 6 sowie dem Integrator 7 bestehenden I-Anteil des PID-Reglers 12 ist auch in diesem Ausführungsbeispiel die Regelabweichung e als Eingangssignal zugeführt. Auch in diesem Ausführungsbeispiel vermindert das Ausgangssignal des Differenzierers 11 die Aufladung des Integrators 7 entsprechend der Änderungsgeschwindigkeit des Istwertes der Regelgröße dy/dt. Die Anordnung der Wichtungsteile 3, 4, 6 und 10 ist auch bei diesem Ausführungsbeispiel so getroffen, daß die zugehörigen Parameter voneinander entkoppelt sind. Bei einer Verstellung eines der Parameter K_{P}, K_{D}, K_{I} oder K_{DI} behalten die jeweils anderen Parameter ihren bisherigen Wert bei.

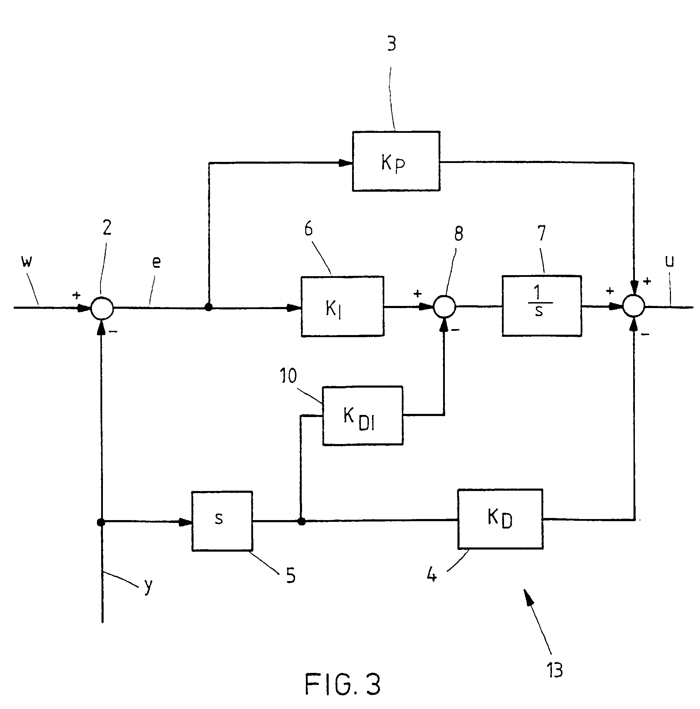

In der Figur 3 ist das Blockschaltbild eines weiteren erfindungsgemäßen PID-Reglers 13 dargestellt. Abweichend von dem in der Figur 2 dargestellten PID-Regler 12 ist die Reihenfolge des Wichtungsteils 4 und des Differenzierers 5 des D-Anteils vertauscht, so daß zuerst die zeitliche Ableitung des Istwertes der Regelgröße dy/dt gebildet wird und erst dann die Wichtung dieses Signals erfolgt. Das Ausgangssignal des Differenzierers 5 ist dem Wichtungsteil 10 zugeführt, und der Ausgang des Wichtungsteils 10 ist mit der Summierstelle 8 verbunden. Bei dem PID-Regler 13 wird gegenüber dem in der Figur 2 dargestellten PID-Regler 12 der Differenzierer 11 eingespart. Die Anordnung der Wichtungsteile 3, 4, 6 und 10 ist auch bei diesem Ausführungsbeispiel so getroffen, daß die zugehörigen Parameter voneinander entkoppelt sind. Bei einer Verstellung eines der Parameter K_{P}, K_{D}, K_{I} oder K_{DI} behalten die anderen Parameter jeweils ihren bisherigen Wert bei.

## Patentansprüche

1. PID-Regler mit parallel angeordnetem P-Anteil, I-Anteil und D-Anteil und mit Summierung der Ausgangssignale von P-Anteil, I-Anteil und D-Anteil, dessen I-Anteil mindestens einen Wichtungsteil und einen Integrator aufweist, insbesondere Digitalregler, **dadurch gekennzeichnet,** daß die zeitliche Ableitung des Istwertes der Regelgröße (dy/dt) dem I-Anteil (6 und 7) mit negativem Vorzeichen zugeführt ist.

2. PID-Regler nach Anspruch 1, **dadurch gekennzeichnet,** daß dem Integrator (7) des I-Anteils (6 und 7) die Differenz zwischen der gewichteten Regelabweichung (K_{I} × e) und der gewichteten Ableitung des Istwertes der Regelgröße (K_{DI} × dy/dt) zugeführt ist.

3. PID-Regler nach Anspruch 2, **dadurch gekennzeichnet**, daß die Wichtung der zeitlichen Ableitung der Regelgröße (dy/dt) unabhängig von der Wichtung der Regelabweichung (e) erfolgt.

4. PID-Regler nach Anspruch 2 oder Anspruch 3, **dadurch gekennzeichnet**, daß im P-Anteil (3) und im D-Anteil (4 und 5) eine Wichtung der Signale erfolgt, die unabhängig von der Wichtung der dem Integrator (7) zugeführten Signale ist.

5. PID-Regler nach einem der vorhergehenden Ansprüche, **dadurch gekennzeichnet,** daß dem P-Anteil (3) und dem I-Anteil (6 und 7) die Regelabweichung (e) und dem D-Anteil (4 und 5) der Istwert der Regelgröße (y) zugeführt ist.

6. PID-Regler nach Anspruch 5, **dadurch gekennzeichnet,** daß die Bildung der dem Integrator (7) zugeführten zeitlichen Ableitung des Istwertes der Regelgröße (dy/dt) in dem D-Anteil (5) erfolgt und daß die zeitliche Ableitung des Istwertes der Regelgröße (dy/dt) dem Integrator (7) über einen weiteren Wichtungsteil (10) zugeführt ist.

## Claims

1. PID controller with a P component, an I component and a D component arranged in parallel and with summation of the output signals of the P component, I component and D component, the I component of which comprises at least one weighting element and an integrator, in particular a digital controller,
**characterized in that** the time derivative of the actual value of the control variable (dy/dt) is fed to the I component (6 and 7) as a negative signal.

2. PID controller according to claim 1, **characterized in that** the difference between the weighted control deviation (K_{I} x e) and the weighted derivative of the actual value of the control variable (K_{DI} x dy/dt) is fed to the integrator (7) of the I component (6 and 7).

3. PID controller according to claim 2, characterized in that the weighting of the time derivative of the control variable (dy/dt) occurs independently of the weighting of the control deviation (e).

4. PID controller according to claim 2 or claim 3, **characterized in that** a weighting of the signals occurs in the P component (3) and in the D component (4 and 5) independently of the weighting of the signals fed to the integrator (7).

5. PID controller according to any of the preceding claims, **characterized in that** the control deviation (e) is fed to the P component (3) and the I component (6 and 7) and the actual value of the control variable (y) is fed to the D component (4 and 5).

6. PID controller according to Claim 5, **characterized in that** the time derivative of the actual value of the control variable (dy/dt) which is fed to the integrator (7) is generated in the D component (5) and that the time derivative of the actual value of the control variable (dy/dt) is fed to the integrator (7) through a further weighting element (10).

## Revendications

1. Un régulateur PID, doté d'un élément P, d'un élément I et d'un élément D disposés en parallèle et doté d'une addition des signaux de sortie de l'élément P, de l'élément I et de l'élément D, dont l'élément I présente au moins un élément de pondération et un intégrateur, en particulier un régulateur digital, **caractérisé en ce que** la dérivée (dy/dt) par rapport au temps de la valeur réelle de la grandeur de régulation, pourvue d'un signe négatif, est ramenée vers l'élément I (6 et 7).

2. Un régulateur PID conforme à la revendication n° 1, **caractérisé en ce que** la différence entre l'écart (K_{I} x e) de réglage pondéré et la dérivée (K_{DI} x dy/dt) pondérée de la valeur réelle de la grandeur de régulation est ramenée vers l'intégrateur (7) de l'élément I(6 et 7).

3. Un régulateur PID conforme à la revendication n° 2, **caractérisé en ce que** la pondération de la dérivée (dy/dt) par rapport au temps de la grandeur de régulation est effectuée indépendamment de la pondération de l'écart (e) de réglage.

4. Un régulateur PID conforme à la revendication n°2 ou la revendication n°3, **caractérisé en ce que** une pondération des signaux est effectuée dans l'élément P (3) et l'élément D (4 et 5), indépendamment de la pondération des signaux ramenés vers l'intégrateur (7).

5. Un régulateur PID conforme à une des revendications précédentes. **caractérisé en ce que** l'écart (e) de réglage est ramené vers l'élément P (3) et l'élément I(6 et 7) et la valeur (y) réelle de la grandeur de régulation est ramenée vers l'élément D (4 et 5).

6. Un régulateur PID conforme à la revendication n° 5, **caractérisé en ce que** la dérivée (dy/dt) par rapport au temps de la valeur réelle de la grandeur de régulation, qui est ramenée vers l'intégrateur (7), est générée dans l'élément D (5) et que la dérivée (dy/dt) par rapport au temps de la valeur réelle de la grandeur de la régulation est ramenée vers l'intégrateur (7) en passant par un élément (10) de pondération supplémentaire.
